# EUROPEAN PATENT APPLICATION

(11) **EP 1 615 453 A1**
(43) Date of publication of application: **11.01.2006**
(21) Application number: 04300425.8
(22) Date of filing: 05.07.2004
(51) Int. Cl.: H04N 11/00, H04N 5/232, H04N 7/06

(54) **Video camera and base station therefore**

(71) Applicant: Thomson Licensing, 92100 Boulogne Billancourt (FR)
(72) Inventor: Uijtdehaag, Joost, 4703 AZ Roosendaal (NL); Damstra, Nicolaas Johannes, 4823 MV Breda (NL)
(74) Representative: Rossmanith, Manfred

(57) **Abstract**

A video camera has a camera head (1) generating a video signal, a signal splitter (3) for splitting said video signal into a plurality of sub-signals such that each sub-signal has a lesser bandwidth than the original video signal and the original video signal is restorable from said sub-signals, and a plurality of triax ports (13₁, 13₂) connected to said signal splitter (3) for transmitting a respective one of said sub-signals. A base station for cooperating with the video camera comprises a plurality of triax ports for receiving said sub-signals and a signal combiner for restoring the original video signal from said sub-signals.

## Description

The present invention relates to a video camera capable of providing a video signal at a high bandwidth, and a base station, which is adapted to cooperate with such a video camera.

Professional high definition television (HDTV) broadcast cameras for studio and electronic field productions today use either an optical fibre or a special coaxial cable, referred to as a triax cable, for communicating with a base station where image data from one or more cameras are collected and processed. Optical fibres allow very high data rates between the camera and the base station, so that many experts expect that in the long run optical fibre technology will become standard for connecting cameras and base stations. At present, however, fibre technology has some difficulties in penetrating the market, because in many facilities where professional video cameras are used, for example in sport stadiums, triax cables are installed, whereas optical fibres are not. Accordingly, a producer who uses triax transmission technology, for recording an event, can bring his cameras to a given location, install his base station, and can interconnect cameras and base stations using triax cables that are present on the location. A producer who uses optical fibre technology cannot rely on such fibres being present, so that for recording the same event, he must not only install his cameras and base station but must also do the wiring. This does not only increase the cost of setting up his equipment, it also decreases its reliability. Therefore, triax technology will probably be continued to be used for quite a long time in the future.

In a triax cable, information is transferred from the camera to the base station and vice versa using a plurality of carriers at different frequencies. Some of these have components of the camera's video signal modulated onto them in order to transfer the video signal to the base station, other carriers are modulated in the base station in order to transfer control information from there to the camera. All these carriers suffer an attenuation in the cable that imposes an upper limit for the length the triax cable can have. For standard definition cameras, this upper limit is at approximately 3 km; for HDTV cameras, in which the bandwidth of the video signal is higher, the usable maximum length of the triax cable reduces to about 1500 m.

In a number of applications, especially when recording a sports event, it is interesting to generate more pictures per second than under normal operating conditions. The extra pictures generated are used to play back certain actions in slow motion while maintaining sharpness in moving objects. This is a common feature in standard definition TV camera systems. It would be desirable to provide the same feature in HDTV cameras, too, but the problem arises that if the extra pictures also have to be transmitted via the existing triax cables, the maximum useable length of the cable decreases still further. If the maximum useable length becomes less than the length of the installed cable, it is quite evident that the system will become inoperable.

The object of the present invention is to provide a video camera and a base station adapted to cooperate with such a camera, which can transmit and receive, respectively, video signals of a very high bandwidth without suffering from the maximum useable length limitations set out above.

The solution relies on the fact, that in most locations, a plurality of triax cables is installed in order to satisfy the needs of several simultaneous productions. It is therefore possible, on the camera side, to provide a signal splitter for splitting a video signal from a camera head of the camera into a plurality of sub-signals such that each sub-signal has a lesser bandwidth than the original video signal from the camera head, and which nevertheless comprise essentially all information from the original video signal, so that this later signal can be restored from said sub-signals, and a plurality of triax ports connected to said signal splitter for transmitting a respective one of said sub-signals. Conversely, on the side of the base station a corresponding plurality of triax ports is provided for receiving said sub-signals, and these are connected to a signal combiner for restoring the original video signal from said sub-signals. If the bandwidth of such a sub-signal is not more than that of a conventional HDTV video signal at standard frame rate, the maximum useable cable length for this sub-signal can be made the same as for the conventional HDTV video signal. If the camera generates a video signal at twice the normal frame rate, it can be divided into two sub-signals, each of which has approx. the same bandwidth and the same maximum useable cable length as the conventional HDTV signal.

Preferably, therefore, the number of triax ports and sub-signals is two. However, a skilled person will easily recognize that the present invention can straightforwardly be generalized to an arbitrary integer number n>2 of ports and cables.

A practical scheme for distributing the bandwidth of the original video signal to the sub-signals is to assign to each triax port a set of frame lines of the original video signal that are to be transmitted by said port. In the simplest case, one of said triax ports may be assigned the even lines of each frame, and the other triax port is assigned its odd lines.

Alternatively, each sub-signal might be representative of a subset of the frames or fields of the video signal. E.g., the first port might be assigned even-numbered frames, and the other odd-numbered ones.

In order to restore the original video signal correctly from the sub-signals at the base station, it must be ensured that the correct one of the various sub-signals is received at each port of the base station. A particularly simple and convenient scheme for this makes use of the fact that operating power for the video camera is conventionally transmitted via the triax cable, too. In the base station, a power supply that provides operating power for the camera is connected to only one of said triax ports. At the video camera, an indicator is provided for indicating whether operating power is received at a given one of said triax ports or not. Such an indicator may be provided for both triax ports of the camera, but it is sufficient if only one port has it. If the indicator of this one port indicates that operating power is present, it is ensured that the two triax cables between base station and camera are connected in the correct order. If the indicator shows that operating power is not received, it is sufficient to interchange the cables connected to the two ports of the camera.

Another solution to the same problem is to provide the video camera with a switching unit for detecting at which one of its triax ports the operating power is received, and for switching the first one of said sub-signals from the signal splitter to a triax port where operating power is received, and a second sub-signal to a triax port where operating power is not received.

In order to cope with different propagation delays in the triax cables, at least one of the triax ports of the base station, preferably both, should comprise a delay circuit for delaying the sub-signal received at said port. Further, a timing measurement circuit should be provided at the base station for detecting a timing difference between the sub-signals received at said triax ports and setting the delay circuit according to said timing difference.

Since the triax cable transmits information in both directions, one might also consider providing a delay circuit at at least one of the triax ports of the camera for delaying the sub-signal to be transmitted at said port, and, eventually, a timing measurement circuit for detecting a timing difference between the sub-signals received at said triax ports from the base station and for setting the delay circuit accordingly.

Further features and advantages of the present invention will become apparent from the subsequent description of its preferred embodiments, referring to the appended drawings, in which:
- Fig. 1: is a block diagram of electronic components of a video camera according to the present invention,
- Fig. 2: is a block diagram of a base station that is adapted to cooperate with the video camera of Fig. 1, and
- Fig. 3: is a block diagram of an alternative embodiment of a base station.

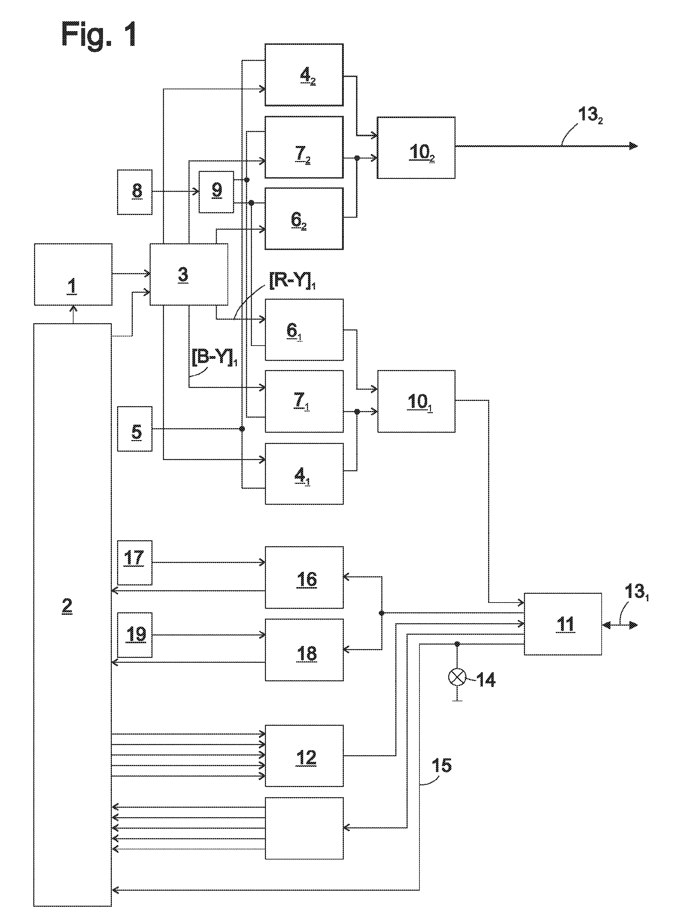

In Fig. 1, reference numeral 1 designates a camera head comprising a CCD or another appropriate photosensitive device for converting an optical image projected onto the device into a digital electronic image signal. An electronic control unit such as a microprocessor 2 sets a frame rate at which the camera head 1 supplies video frames to a signal splitter 3. The signal splitter 3 has two operating modes, which are also set by the microprocessor 2.

In the first operating mode, which corresponds to the camera head 1 providing images at a normal rate of e.g. 30/s, the signal splitter 3 transmits the luminance information of the output signal from camera head 1 to a first AM modulator 4₁, where it is modulated on a 56 MHz carrier from a local oscillator 5. Chrominance information is transmitted as two channels [R-Y]₁, [B-Y]₁ to AM modulators 6₁, 7₁. These modulators receive carrier signals at 112 MHz from a local oscillator 8, phase shifted with respect to each other by 90° by a phase shifter 9. The high frequency signals thus obtained are super-imposed in a first frequency combiner 10₁. The output from frequency combiner 10₁ is supplied to a two-way frequency combining and separating filter 11, where it is combined with a plurality of FM modulated signals from FM transmitter 12 and outputs to triax connector 13₁. The signal from FM transmitter 12 comprises five carrier frequencies, which are modulated with control data of the camera, left and right channel audio signals from microphones that are directed towards the scene which is observed by the camera, an audio channel from a microphone in a headset of a camera man who is operating the camera, and miscellaneous other information.

Via the triax connector 13₁, the camera receives operating power. An indicator, e.g. a lamp or LED 14, is connected to an operating power line 15 in order to indicate whether operating power is received at triax connector 13₁ or not.

The camera further comprises a first AM receiver 16 connected to an 11 MHz local oscillator 17 for demodulating a video signal received via triax connector 13₁ and filter 11 from a base station and to be displayed in a viewfinder of the camera. A second AM receiver 18 connected to a 160 MHz local oscillator 19 is for receiving a teleprompter signal from the base station.

The camera further comprises a second AM modulator 4₂ which has inputs connected to signal splitter 3 and local oscillator 5, respectively, and an output connected to a second frequency combiner 10₂, and AM modulators 6₂, 7₂ that have an input connected to phase shifter 9 and to signal splitter 3, respectively, and an output connected to a second frequency combiner 10₂. Second frequency combiner 10₂, in turn, has an output connected to a second triax connector 13₂.

In the first operating mode, AM modulators 4₂, 6₂, 7₂ are idle.

In the second operating mode, the camera head 1 is set to provide frames at twice the rate of the first operating mode, and the signal splitter 3 is set to distribute the video signal it receives from the camera head 1 as two sub-signals to the two sets of AM modulators 4₁, 6₁, 7₁ and 4₂, 6₂, 7₂, respectively. The signal splitter 3 receives from the camera head 1 a continuous sequence of data, that defines, frame by frame, line by line in each frame and pixel by pixel in each line, R, G and B values of each pixel. In the signal splitter 3, data of every second frame are buffered until corresponding data of the next frame begin to arrive, and then the image data of both frames are simultaneously converted into luminance and chrominance signals [Y]₁, [Y]₂, [B-Y]₁, [B-Y]₂, [R-Y]₁, [R-Y]₂, and are output to modulators 4₁, 6₁, 7₁ and 4₂, 6₂, 7₂, respectively. Techniques for converting an image frame into chrominance and luminance signals are generally known in the art and need therefore not be described in detail here. In this way, frame data are alternately supplied to each of the two groups of modulators, so that at the output of frequency combiners 10₁, 10₂, video sub-signals are obtained, the bandwidth of which is identical to that of the video signal output at combiner 10₁ in the first operating mode.

Alternatively, if the camera head 1 provides the video data on a field by field basis, one field comprising the odd-numbered lines of a frame and the other the even-numbered lines, the signal splitter 3 buffers one field only and transmits, while the next field is received, luminance and chrominance information of the buffered field to a first group of AM modulators 4₁, 6₁, 7₁ or 4₂, 6₂, 7₂ and the currently received field to the other group.

A further reduction of buffer capacity is achieved if only one line of the video signal from camera head 1 is buffered in the signal splitter 3, and while the next line is being received, luminance and chrominance signals corresponding to said two lines are transmitted to the first and second group of AM modulators, respectively.

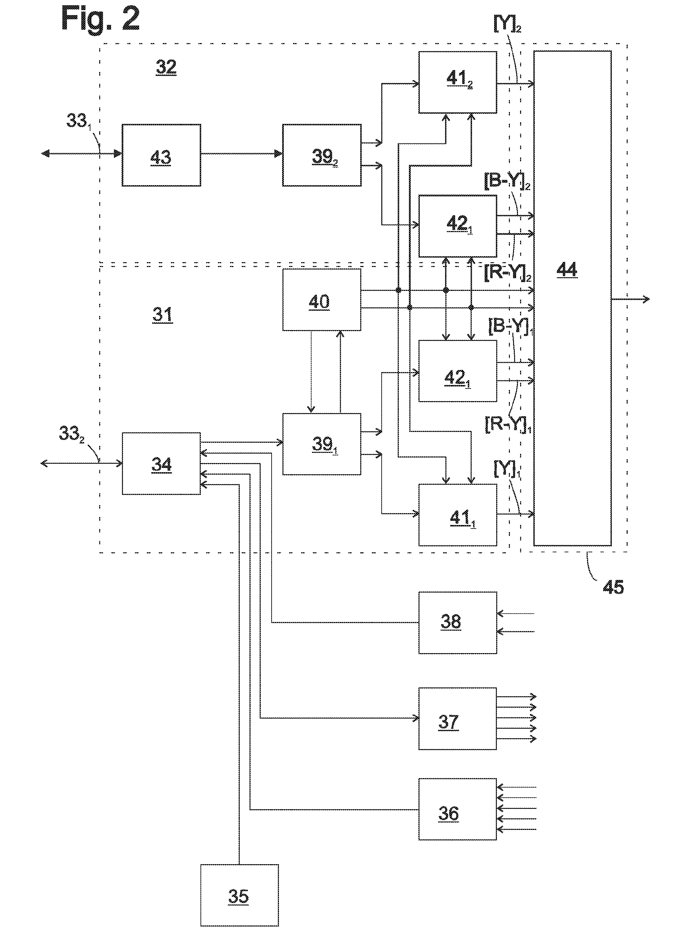

Fig. 2 is a block diagram of a base station, which is adapted to cooperate with a camera of Fig. 1. The base station comprises a plurality of sockets, not shown, for inserting a camera interface circuit board, two of which, 31 and 32, are represented by dashed outlines in Fig. 2. Each circuit board 31, 32 comprises a triax connector 33₁, 33₂ for connecting to connectors 13₁, 13₂ via a triax cable, not shown.

Circuit 31 comprises a combining/separating filter 34, the function of which is opposite to that of filter 11 of the camera. It receives operating power for the camera from a power supply 35. It is connected to FM transmitters and receivers 36, 37 that provide control data for the camera, an audio signal to be played back in the headset of the camera man etc. and receives the signals from FM transmitter 12 of the camera. Filter 34 is further connected to a twofold AM transmitter 38 that provides the external video signal for playing back in the viewfinder of the camera and the teleprompter signal. It is further connected to a so-called front end multiplexer 39₁, the function of which is opposed to that of frequency combiner 10₁, 10₂ in that it decomposes the HF signal transmitted via the triax cable into a first band containing the luminance information, a second band containing the chrominance information and a signal which is transmitted to an auxiliary receiver 40 for restoring the carriers of the luminance and chrominance signal components and detecting the synchronising white impulses in the HF signal.

The luminance component from front end multiplexer 39₁ and the 56 MHz carrier from auxiliary receiver 40 are supplied to AM receiver 41₁ which restores luminance signal [Y]₁. The chrominance component and the 112 MHz carrier from auxiliary receiver 40 are supplied to a QAM receiver 42₁ which restores chrominance signals [B-Y]₁, [R-Y]₁.

The circuitry of interface circuit board 32 is simplified with respect to that of circuit board 31. Since the circuit board 31 only receives a sub-signal from the camera, but does not transmit, the two-way combining/separating filter 34 is replaced by a simple one-way high pass filter 43. There is no auxiliary receiver. Instead, carrier and synchronization signal inputs of AM receiver 41₂ and QAM receiver 42₂ of circuit board 32 are connected to the corresponding outputs of auxiliary receiver 40 of circuit board 31. The receivers 41₂, 42₂ will nevertheless provide correct luminance signals [Y]₂ and chrominance signals [R-Y]₂, [B-Y]₂, if the lengths of the triax cables between connector pairs 13₁, 33₁ and 13₂, 33₂ are identical.

A digital signal combiner 44 on a third circuit board 45 receives the various video signal components from receivers 41₁, 42₁, 41₂, 42₂, and in the second operating mode, it combines them so as to restore the video signal as originally provided by camera head 1. If the camera and the base station are in the first operating mode, no meaningful signal is received at connector 33₂, so that the output signals of receivers 41₂, 42₂ are also meaningless and are discarded at the signal combiner 44.

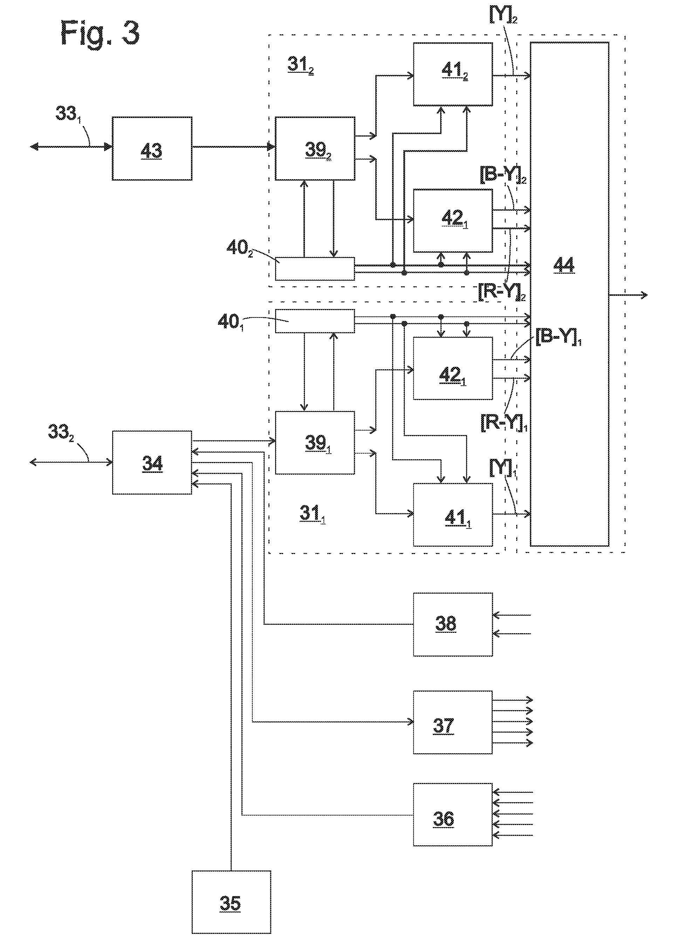

If the length of the cables between the pairs of connectors 30₁, 33₁ and 30₂, 33₂ is not identical, carriers and synchronisation signal obtained by auxiliary receiver 40₁ cannot be used for demodulation in receivers 41₂ and 42₂ of circuit board 32. In that case, according to the embodiment shown in Fig. 3, two camera interface circuit boards 31₁, 32₁ are provided, both of which have an auxiliary receiver 40₁, 40₂ as described above with respect to Fig. 2, that supplies carrier and synchronization signals only to receivers 41₁, 42₁, 41₂ and 42₂ of the same circuit board 31₁ or 31₂.

The signal combiner 44 receives carriers and synchronization signals from both auxiliary receivers 40₁, 40₂ to detect a delay between the signals from the two circuit boards 31₁, 31₂ and takes account of this delay when restoring the original video signal from the signal components [Y]₁, [Y]₂, [B-Y]₁, [B-Y]₂, [R-Y]₁, [R-Y]₂ it receives from the two circuit boards. For compensating the delay, video data from the earlier one of the two circuit boards have to be buffered at the signal combiner 44. The capacity of the base station of Fig. 3 to compensate different lengths of the two triax cables is in principle only limited by the buffer storage capacity of signal combiner 44.

In the above examples it has been assumed that in the second operating mode, the frame rate of the video signals is twice that of the first operating mode. Obviously, it will also be possible to operate at three times or, generally, n times the frame rate of the first operating mode if three or n triax cables and interface circuit boards are provided.

## Claims

1. A video camera having a camera head (1) generating a video signal, a signal splitter (3) for splitting said video signal into a plurality of sub-signals such that each sub-signal has a lesser bandwidth than the original video signal and the original video signal is restorable from said sub-signals, and a plurality of triax ports (13₁, 13₂) connected to said signal splitter (3) for transmitting a respective one of said sub-signals.

2. The video camera according to claim 1, wherein the number of triax ports (13₁, 13₂) and sub-signals is two.

3. The video camera according to claim 1 or 2, in which each triax port (13₁, 13₂) is assigned a set of frame lines of the original video signal for transmission by said port.

4. The video camera according to claim 3, in which one of said triax ports (13₁, 13₂) is assigned the even lines of each frame and the other triax port is assigned the odd lines.

5. The video camera according to claim 1 or 2, in which each sub-signal is representative of a subset of the frames or fields of the video signal.

6. The video camera according to one of the preceding claims, comprising an indicator (14) for indicating whether operating power is received at a given one (13₁) of said triax ports (13₁, 13₂) or not.

7. The video camera according to claim 5, comprising a switching unit for detecting whether operating power is received at each of said triax ports or not, and for switching a first sub-signal to a triax port where operating power is received and a second sub-signal to a triax port where operating power is not received.

8. The video camera according to one of the preceding claims, having a high bandwidth operating mode in which the signal splitter (3) is effective to split the video signal into said sub-signals, and a low bandwidth operating mode in which the complete video signal from said camera head (1) is transmitted on at least one of said triax ports (13₁).

9. A base station for cooperating with the video camera according to one of the preceding claims, the base station comprising a plurality of triax ports (33₁, 33₂) for receiving said sub-signals and a signal combiner (44) for restoring the original video signal from said sub-signals.

10. The base station according to claim 9, wherein at least one of said triax ports (33₁, 33₂) is associated to a delay circuit (44) for delaying the sub-signal received at said port.

11. The base station according to claim 10, further comprising a timing measurement circuit (44) for detecting a timing difference between the sub-signals received at said triax ports (33₁, 33₂) and setting the delay circuit according to said timing difference.

12. The base station according to one of claims 9 to 11, wherein a power supply (35) for transmitting power to the camera is connected to only one (33₁) of said triax ports.
